(19) Europäisches Patentamt
European Patent Office
Office européen des brevets

(11) Publication number: **0 138 614**
**B1**

(12) # EUROPEAN PATENT SPECIFICATION

(45) Date of publication of patent specification: **25.01.89**

(51) Int. Cl.[4]: **C 09 D 7/00,** C 09 D 5/04, C 08 G 65/08

(21) Application number: **84307083.0**

(22) Date of filing: **16.10.84**

(54) **Coating compositions containing copolymers of ethylene oxide and long chain epoxides.**

(30) Priority: **17.10.83 US 542852**

(43) Date of publication of application:
**24.04.85 Bulletin 85/17**

(45) Publication of the grant of the patent:
**25.01.89 Bulletin 89/04**

(84) Designated Contracting States:
**AT BE CH DE FR GB IT LI NL SE**

(56) References cited:
**GB-A-1 146 536**
**GB-A-1 380 182**
**US-A-3 779 970**
**US-A-4 304 902**
**US-A-4 337 184**

(73) Proprietor: **HERCULES INCORPORATED**
**Hercules Plaza**
**Wilmington Delaware 19899 (US)**

(72) Inventor: **Royce, Richard Day, Jr.**
**2107 North Harrison Street**
**Wilmington Delaware 19802 (US)**

(74) Representative: **De Minvielle-Devaux, Ian Benedict Peter et al**
**CARPMAELS & RANSFORD 43, Bloomsbury Square**
**London WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 138 614 B1**

**Description**

This invention relates to water-based protective coating compositions containing as the protective colloid, thickening agent, and rheology modifier, a copolymer of ethylene oxide and at least one 1,2-epoxyalkane having 8 to 26 carbon atoms.

Water-based protective coating compositions are commonly known as latex paints or dispersions paints.

The principal ingredients of a water-soluble protective coating composition are an aqueous polymer dispersion (also known as a latex), an opacifying pigment, a pigment dispersing agent, and a water-soluble protective colloid.

Up until now typical water-soluble protective colloids used in the manufacture of latex paints include casein, methyl cellulose, hydroxyethylcellulose, sodium carboxymethylcellulose, polyvinyl alcohol, starch, sodium polyacrylates, etc. These colloids are used to stabilise the latices, to improve open time (wet edge property), or to aid in application properties, such as flow and levelling, or combinations thereof. Unfortunately, these colloids are not without their disadvantages. The natural-based colloids such as the aforementioned cellulose ethers, can be susceptible to biological degradation and frequently impart poor flow and levelling properties. The synthetic materials, such as the polyvinyl alcohol, in the other hand, often lack the desirable thickening efficiency thereby providing a formulation which has reduced sag resistance when applied.

GB—A—1380182 and US—A—3779970 refer to water-based coating compositions containing, as thickeners, a derivative of ethylene oxide or an esterified carboxylic polymer having a polyoxyethylene chain.

There is, however, still a need for a protective colloid having improved properties, such as resistance to biological degradation and efficiency as a rheology modifier, and which provides a latex paint with good flow and levelling properties.

This invention provides water-based protective coating compositions characterized in that a hydrophobically modified water-soluble copolymer of ethylene oxide and at least one long chain epoxy-alkane is used as the protective colloid, and thickener, and rheology modifier. The compositions of this invention afford superior flow and leveling properties under both high and low shear conditions, and give excellent gloss.

Suitable ethylene oxide copolymers include the copolymers of ethylene oxide with at least one 1,2-epoxyalkane containing from 8 to 26 carbon atoms, preferably from 12 to 24 carbon atoms. The 1,2-epoxyalkanes have the general formula

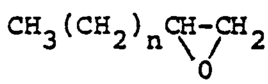

wherein n is 5 to 23. Suitable 1,2-epoxyalkanes include 1,2-epoxyhexadecane.

The ethylene oxide copolymers contain, by weight of the copolymer, from 95% to 99.8% ethylene oxide and from 5% to 0.2% of the 1,2-epoxyalkane, preferably from about 1.5% to about 0.8%, and have a molecular weight from about 50,000 to about 320,000, preferably from about 80,000 to about 250,000. Generally from about 0.15% to about 1.0%, by weight of the total composition, of the ethylene oxide copolymer is used. Preferably from about 0.2% to about 0.7% of the copolymer is employed.

Typical ethylene oxide copolymers and methods of preparing same are disclosed in U.S. Patent 4,304,902.

There are three principal types of aqueous polymer dispersions used in the manufacture of water-based protective coating compositions, that is, the styrene-butadiene type, the vinyl acetate polymer and copolymer type, and the acrylic type. The predominant polymer used depends on the region and the particular type of water-based protective coating composition or latex paint, for example, gloss, semi-gloss, matte.

Typically, the opacifying pigment is titanium dioxide ($TiO_2$), alumina coated $TiO_2$, or an alumina and silica coated $TiO_2$. The rutile form of $TiO_2$ is preferred.

Any efficient dispersing agent can be employed to disperse the opacifying pigment. Suitable dispersing agents include diisobutylene-maleic anhydride copolymers. A good dispersing agent is essential for the preparation of high solids content latex paints and for good shelf stability. Moreover, the use of a pigment dispersing agent also allows some of the more costly opacifying pigment to be replaced with less expensive extender pigments, such as talc, silica, calcium carbonate, and mica.

In addition to the principal ingredients, latex paints can contain additives such as defoamers, extender pigments, preservatives, surfactants, coalescing solvents, plasticizers, anti-corrosion agents, pH buffers, freeze-thaw stabilizers, storage stabilizers, and fragrances. Hercules defoamer 501 available from Hercules Incorporated is a suitable defoamer. A typical preservative is di(phenyl-mercury) dodecenyl succinate. Suitable surfactants include sodium dioctylsulfosuccinate. A typical coalescing solvent is 2,2,4-trimethyl-1,3-pentanediol monoisobutyrate.

To further illustrate this invention, various illustrative examples are set forth below.

All parts and percentages are by weight, unless otherwise specified, throughout this specification.

Example 1

This example illustrates the preparation of the ethylene oxide copolymers having utility in the water-based protective coating composition of this invention.

A dry reaction vessel equipped with a magnetic stirring bar is charged with 50 ml of toluene, 50 ml of heptane, and 3.0 g of 1,2-epoxyalkane. The solution is sparged with nitrogen for 30 minutes and then 22 g of ethylene oxide is added via a cold syringe. The vessel is brought to 65°C by heating in a water bath, and 4.0 ml of a 1.3M catalyst solution is added. (The catalyst is prepared using the formulation and method set forth in Example 1 of U.S. Patent 3,642,667). The contents of the reaction vessel are kept at 65°C for 2.5 hours at which time 2 ml of absolute ethanol is added as a shortstop. The contents of the reaction vessel are cooled and the white slurry is poured into 1.5 liters of a 50/50 hexane/acetone solution. The polymer precipitate is allowed to settle and the solvent is then decanted. The copolymer product is washed two more times with acetone, filtered, and dried. The copolymer product has a molecular weight from about 450,000 to about 600,000. The dry ethylene oxide copolymer is then treated with a sufficient amount of electron beam radiation, generally from about 0.2 to about 2.0 megarads, from a van der Graaf electron beam generator, and subsequently cured at 53°C. for about 18 hours to produce an ethylene oxide copolymer having a molecular weight of from about 50,000 to about 320,000.

Any convenient method of degradation or depolymerization to reduce the molecular weight of the ethylene oxide copolymer can be used. For example, the molecular weight of the copolymer can be reduced by treatment with benzoyl peroxide in toleune at 80°C. for 30 minutes, or with potassium peroxydisulfate in water at 60°C. for 60 minutes.

The ethylene oxide copolymers prepared essentially as set forth in Example 1 are listed in Table 1 with the major variations and molecular weight as indicated.

Table 1

| Ethylene Oxide copolymer No. | Carbon atoms in the epoxy-alkane comonomer | Weight % of comonomer in copolymer | Molecular weight of the copolymer |
|---|---|---|---|
| 1 | $C_{16}$ | 1.9 | 135,000 |
| 2 | $C_{16}$ | 1.1 | 250,000 |
| 3 | $C_{16}$ | 1.1 | 200,000 |
| 4 | Mixture $C_{20-24}$(a) | 1.1 | 250,000 |
| 5 | Mixture $C_{20-24}$ | 1.1 | 290,000 |
| 6 | Mixture $C_{20-24}$ | 1.1 | 320,000 |
| 7 | Mixture $C_{20-24}$ | 4.2 | 85,000 |

(a) The mixture of $C_{20-24}$ consists of about 75% of a 1,2-epoxyalkane having 20 carbon atoms, about 15% of a 1,2-epoxyalkane having 22 carbon atoms, and about 10% of a 1,2-epoxyalkane having 24 carbon atoms.

Examples 2—11

This example illustrates various exbodiments of the water-based protective coating or latex paint composition of this invention and how to prepare it.

A. Preparation of solutions of the ethylene oxide copolymer thickeners.

A mixing vessel fitted with a stirrer is charged with 95g. of a 50/50, by weight, mixture of propylene glycol and water, and then 5g. of an ethylene oxide copolymer is added. The contents of the mixing vessel are stirred at room temperature (about 23°C.) for a time sufficient to dissolve the ethylene oxide copolymer in the propylene glycol and water mixture, generally about 1 hour. The resulting solution has approximately 5% concentration of the ethylene oxide copolymer thickener.

B. Preparation of water-based protective coating composition.

Suitable amounts of the opacifying pigment, a pigment dispersing agent, any extender pigments, defoamer, solvent and water are charged in a mixing vessel equipped with a high speed stirrer and stirred

at high speed at room temperature (about 23°C.) until a homogeneous blend is obtained (about 20 minutes). The aqueous polymer dispersion or latex, water, and any other conventional additives, such as coalescing solvents, preservatives, surfactants, and the like, are added and stirred at moderate speed at room temperature until a homogeneous blend is obtained (about 20 minutes). A suitable amount of the thickener solution prepared as set forth in A, above is then added and stirring continued at room temperature at a moderate speed until a homogeneous water-based protective coating composition or latex paint is obtained (about 30 minutes). Table 2 below sets forth three embodiments of the latex paint compositions of this invention.

Table 2

| | Parts by Weight | | |
|---|---|---|---|
| Ingredients | Example 2 | Example 9 | Example 11 |
| Opacifying pigment, $TiO_2$ | 12.5 | 107.0 | 135.0 |
| Pigment dispersant | 4.25 | 3.5 | 5.4 |
| Propylene glycol solvent | 25.0 | 20.0 | 39.0 |
| Defoamer | 1.0 | 1.0 | 1.0 |
| Extender pigment | 120.0 | - | - |
| Water | 37.0 | 80.0 | 3.0 |
| Latex A(1) | 250.0 | - | - |
| Latex B(1) | - | 218.0 | - |
| Latex C(1) | - | - | 278.0 |
| Coalescing solvent | 10.8 | 5.5 | 8.0 |
| Preservative | 0.5 | 0.5 | 0.5 |
| Surfactant | 0.25 | - | 1.0 |
| Defoamer | 1.35 | 1.0 | 1.45 |
| Water | 18.0 | 45.0 | 30.0 |
| Thickener solution | 50.0(2) | 21.5(3) | 30.5(3) |
| Stormer viscosity, Kreb Units (KU) | 92.0 | 103.0 | 86.0 |

(1) Latex A is Rhoplex AC-417 acrylic copolymer latex (48.0% solids); Latex B is Rhoplex AC-996 acrylic copolymer latex (60.0% solids); and Latex C is Rhoplex AC-490 acrylic copolymer latex (46.5% solids). Rhoplex is a trademark of Rohm and Haas Company for its acrylic latices.

(2) 4.8% solids

(3) 5.0% solids

In Examples 3—8, the formulation set forth in Table 2 for Example 2 is used except that the thickener solution used contains different ethylene oxide copolymers. Likewise the formulation set forth in Table 2 for Example 9 is used for Example 10 except that the thickener solution used contains a different ethylene oxide copolymer. The particular ethylene oxide copolymers which are used in Examples 2—11 are further identified in Table 3 below together with the properties of the water-based protective coating compositions or latex paints of this invention as compared to latex paint controls, each control containing a different weight % of hydroxyethyl cellulose (HEC) having a hydroxyethyl M.S. of 2.5 and a molecular weight of 600,000 as the thickener. (The designation M.S. refers to the average number of moles of hydroxyethyl substituent groups combined per anhydroglucose unit of the cellulose molecule). Hydroxyethyl cellulose is used as the thickener in the controls since it is a common latex paint thickener, and since homopolymers of ethylene oxide do not satisfactorily thicken latex paints and, thus, cannot be used as meaningful controls.

Table 3

| Example No. | Copolymer No. (Table 1) | Latex Type(1) | Copolymer or HEC, Wt.% total composition | Flow and Levelling (2) | Sag Resistance(3) | Spatter(4) |
|---|---|---|---|---|---|---|
| 2 | 3 | A | 0.40 | 10 | 9 | 8 |
| 3 | 1 | A | 0.46 | 10 | 12 | 10 |
| 4 | 2 | A | 0.39 | 10 | 12 | 6 |
| 5 | 4 | A | 0.69 | 10 | 8 | 6 |
| 6 | 5 | A | 0.35 | 10 | 8 | 7 |
| 7 | 6 | A | 0.22 | 5 | 12 | 10 |
| 8 | 7 | A | 0.49 | 10 | 8 | 6 |
| Control | HEC | A | 0.23 | 3 | 12 | 5 |
| 9 | 1 | B | 0.21 | 10 | 12 | 8 |
| 10 | 6 | B | 0.24 | 10 | 12 | 7 |
| Control | HEC | B | 0.51 | 4 | 12 | 4 |
| 11 | 6 | C | 0.29 | 8 | 11 | 8 |
| Control | HEC | C | 0.25 | 3 | 12 | 3 |

(1) Latex A is Rhoplex AC-417 acrylic copolymer latex (48.0% solids); Latex B is Rhoplex AC-996 acrylic copolymer latex (60.0% solids); and Latex C is Rhoplex AC-490 acrylic copolymer latex (46.5% solids). Rhoplex is a trademark of Rohm and Haas Company for its acrylic latices.

(2) Visual examination of drawdowns using Leneta blade; ASTM D4062-81. Ratings are 1-10 where 1 is unacceptable flow and levelling and 10 is superior flow and levelling.

(3) Leneta Anti-Sag Index; ASTM D3730-78. Ratings are 1-12 where 1 is unacceptable sag resistance and 12 is superior sag resistance.

(4) Spatter is determined according the procedure described in Sward, G.G., The Paint Testing Manual, 425 (13th Ed. 1972). Ratings are 1-10 where 1 is unacceptable tendency to spatter and 10 is superior in its tendency not to spatter.

Thus, as the data in Table 3 illustrates, this invention provides water-based protective coating compositions having greatly reduced spatter, excellent flow and levelling properties, and largely uncompromised sag resistance. Moreover, the ethylene oxide copolymers used in the water-based protective coating compositions of this invention give excellent gloss characteristics when combined with aqueous polymer dispersions of latices.

Features, advantages and other specific embodiments of this invention will become readily apparent to those exercising ordinary skill in the art after reading the foregoing disclosures.

**Claims**

1. A water-based protective coating composition having (a) an aqueous polymer dispersion, (b) an opacifying pigment, (c) a pigment dispersing agent, and (d) a water-soluble protective colloid and thickener, characterized in that the water-soluble protective colloid and thickener is a copolymer containing, by weight of the copolymer, from 95% to 99.8% ethylene oxide and from 5% to 0.2% of at least one 1,2-epoxyalkane having 8 to 26 carbon atoms.

2. The composition of claim 1 wherein (d) is present in an amount from about 0.15% to about 1.0% by weight of the composition.

3. The composition of claim 1 or claim 2 wherein the 1,2-epoxyalkane is 1,2-epoxyhexadecane.

4. The composition of any preceding claim wherein (d) has a molecular weight of from about 50,000 to about 320,000.

5. The composition of any preceding claim wherein the aqueous pigment dispersion is an acrylic copolymer latex.

6. A method of impregnating or coating a substrate which comprises treating the substrate with the composition of claim 1.

**Patentansprüche**

1. Eine wässerige Schutzüberzugzusammensetzung, die (a) eine wässerige Polymeridispersion, (b) ein deckendes Pigment, (c) ein Pigmentdispersionsmittel, und (d) ein wasserlösliches Schutzkolloid und Dickungsmittel aufweist, dadurch gekennzeichnet, daß das wasserlösliche Schutzkolloid und Dickungsmittel ein Copolymer ist, welches, bezogen auf das Gewicht des Polymers, von 95% bis 99,8% Ethylenoxid und von 5% bis 0,2% wenigstens eines 1,2-Epoxyalkans enthält, das 8 bis 26 Kohlenstoffatome aufweist.

2. Zusammensetzung nach Anspruch 1, in welcher (d) in einem Anteil von etwa 0,15% bis etwa 1,0%, bezogen auf das Gewicht der Zusammensetzung enthalten ist.

3. Zusammensetzung nach Anspruch 1 oder 2, in welcher das 1,2-Epoxyalkan 1,2-Epoxydekan ist.

4. Zusammensetzung nach einem der vorhergehenden Ansprüche, in welcher (d) ein Molekulargewicht von etwa 50.000 bis etwa 320.000 aufweist.

5. Zusammensetzung nach einem der vorhergehenden Ansprüche, in welcher die wässerige Pigmentdispersion ein Akrylcopolymerlatex ist.

6. Verfahren zur Imprägnierung oder Beschichtung eines Substrates, dadurch gekennzeichnet, daß das Substrat mit einer Zusammensetzung nach Anspruch 1 behandelt wird.

**Revendications**

1. Composition de revêtement protecteur à base d'eau, contenant (a) une dispersion aqueuse de polymère, (b) un pigment opacifiant, (c) un agent de dispersion du pigment et (d) un colloïde de protection et épaississant hydrosoluble, caractérisée en ce que le colloide de protection et épaississant hydrosoluble est un copolymère contenant, sur la base du poids de coplymère, de 95% à 99,8% d'oxyde d'éthylène et de 5% à 0,2% d'au moins un 1,2-époxyalcane comportant 8 à 26 atomes de carbone.

2. Composition selon la revendication , dans laquelle (d) est présent dans une proportion d'environ 0,15% à environ 1,0% en poids de la composition.

3. Composition selon la revendication 1 ou 2, dans laquelle le 1,2-époxyalcane est le 1,2-époxyhexadécane.

4. Composition selon l'une quelconque des revendications 1 à 3, dans laquelle (d) a un poids moléculaire compris entre 50,000 environ et 320,000 environ.

5. Composition selon l'une quelconque des revendications 1 à 4, dans laquelle la dispersoin aqueuse de pigment est un latex de copolymère acrylique.

6. Procédé d'imprégnation ou de revêtement d'un substrat, comprenant l'opération consistant à traiter le substrat avec la composition selon la revendication 1.